# FASCICULE DE BREVET EUROPEEN

(11) **EP 3 352 974 B1**
(45) Date de publication et mention de la délivrance du brevet: **21.08.2019**
(21) Numéro de dépôt: 16784228.5
(22) Date de dépôt: 22.09.2016
(51) Int. Cl.: B29C 64/153, B29C 64/30, B28B 1/00, B33Y 10/00, B33Y 30/00, B33Y 40/00

(54) **SYSTEME ET PROCEDE DE FABRICATION ADDITIVE PAR FUSION LASER D'UN LIT DE POUDRE**
SYSTEM UND VERFAHREN ZUR GENERATIVEN FERTIGUNG DURCH LASERSCHMELZEN EINES PULVERBETTS
SYSTEM AND METHOD FOR ADDITIVELY MANUFACTURING BY LASER MELTING OF A POWDER BED

(30) Priorité: 23.09.2015 FR 1558976
(43) Date de publication de la demande: 01.08.2018
(73) Titulaire: Manutech-USD, 42000 Saint-Etienne (FR); Ecole Nationale d'Ingénieurs de Saint-Etienne, 42023 Saint-Etienne Cedex 2 (FR); Ecole Centrale de Lyon, 69134 Ecully (FR); Centre National de la Recherche Scientifique (C.N.R.S.), 75016 Paris Cedex 16 (FR)
(72) Inventeur: BAUBEAU, Emmanuel, 42000 Saint Etienne (FR); MISSEMER, Florent, 42100 Saint-etienne (FR); BERTRAND, Philippe, 42210 Boisset Les Montrond (FR)
(74) Mandataire: Cabinet Laurent & Charras
(86) Numéro de dépôt international: PCT/FR2016/052401
(87) Numéro de publication internationale: WO 2017/051123

(56) Documents cités:
- WO-A1-2015/181772
- WO-A2-2014/207751
- WO-A2-2015/012992
- DE-B3-102012 219 196

## Description

La présente invention concerne un système et un procédé de fabrication additive par fusion laser d'un lit de poudre. Le domaine de l'invention est celui des procédés de fabrication additive par fusion laser d'un lit de poudre, du type fusion par faisceau laser, fusion laser sélective ou frittage laser sélectif (en Anglais : laser beam melting (LBM), selective laser melting (SLM) ou selective laser sintering (SLS)).

En pratique, la précision géométrique et l'état de surface des pièces fabriquées en mettant en oeuvre ces procédés sont limités par la granulométrie des poudres utilisées, l'épaisseur des couches de poudre fusionnée puis durcie (de l'ordre de quelques grains de poudre) et par la précision de réalisation du cordon de soudure entre grains. Ces contraintes constituent un frein au développement de ces procédés.

Fréquemment, une opération de reprise est nécessaire pour obtenir une pièce fonctionnelle. Les techniques de reprise connues comprennent l'usinage par outil coupant, le sablage, l'attaque électrolytique, le ponçage, le polissage, etc. Cependant, une telle opération prend du temps et représente un surcoût. En outre, une telle opération est parfois impossible à réaliser, par exemple sur les surfaces intérieures des pièces.

WO 2015 012 992 décrit différents modes de réalisation d'un système et d'un procédé de fabrication additive par projection de matière au nexus d'un faisceau laser, et non par fusion laser d'un lit de poudre. Le système comprend deux unités lasers, chacune pourvue de son propre bloc optique, de sorte que les faisceaux sont focalisés en suivant des chemins optiques distincts. Un tel système n'est pas conçu pour la fusion laser d'un lit de poudre. En outre, il présente une structure complexe et manque de précision dans l'usinage.

WO 2015 181 772 divulgue différents modes de réalisation d'un système et d'un procédé de fabrication additive par projection et fusion de poudre. Selon un premier mode de réalisation, le procédé consiste à projeter de la poudre au nexus d'un faisceau laser, comme mentionné ci-dessus. Selon un deuxième mode de réalisation, le procédé consiste à projeter de la poudre sous forme d'une séquence de cercles de poudre adjacents, qui sont tour à tour partiellement fondus par le faisceau laser. Un tel système n'est pas conçu pour la fusion laser d'un lit de poudre.

WO2014 207 751 décrit un système de fabrication additive par fusion laser d'un lit de poudre, le système comprend :- une unité laser émettant sélectivement un faisceau laser pour former au moins une couche de matière par fusion du lit de poudre; un bloc optique permettant de focaliser le faisceau laser sur le lit de poudre à fusionner; le système étant apte à réaliser une pièce par empilement successif de couches de matière fusionnées.

Le but de la présente invention est de proposer un système et un procédé de fabrication additive remédiant aux inconvénients ci-dessus.

A cet effet, l'invention a pour objet un système de fabrication additive par fusion laser d'un lit de poudre, caractérisé en ce qu'il comprend : une première unité laser émettant sélectivement un premier faisceau laser pour former au moins une couche de matière par fusion du lit de poudre ; une deuxième unité laser émettant sélectivement un deuxième faisceau laser pour usiner au moins une partie de cette couche de matière ; et un bloc optique permettant de focaliser le premier faisceau laser sur le lit de poudre à fusionner et le deuxième faisceau laser sur la couche de matière à usiner. Le système est apte à réaliser à réaliser une pièce par empilement successif de couches de matière fusionnées puis usinées.

Ainsi, l'invention permet d'améliorer la précision géométrique et l'état de surface de la pièce réalisée. Une fois formée sous l'action de la première unité laser, par fusion puis durcissement du lit de poudre, chaque couche de matière peut être usinée in-situ sous l'action de la deuxième unité laser. Cet usinage laser est sélectif, c'est-à-dire que chaque couche de matière formée peut être sélectivement usinée ou non, en fonction des caractéristiques de la pièce à réaliser. Dans sa partie finale, le chemin optique du faisceau d'usinage est confondu avec le chemin optique du faisceau de fusion, ce qui procure une grande précision dans l'usinage et simplifie l'architecture du système.

Selon d'autres caractéristiques avantageuses du système selon l'invention, prises isolément ou en combinaison :
- La poudre est en matière plastique, céramique ou métallique.
- La première unité laser comprend une source laser continue.
- La deuxième unité laser comprend une source laser impulsionnelle.
- La source laser impulsionnelle produit des impulsions présentant une durée de l'ordre de quelques femtosecondes à quelques dizaines de picosecondes.
- La source laser impulsionnelle produit des impulsions présentant une durée comprise entre 300 et 900 femtosecondes.
- Le bloc optique comprend un scanner biaxial et une lentille de focalisation.
- Le système comprend également des moyens mobiles de guidage des faisceaux lasers, configurés pour guider sélectivement le premier faisceau laser ou le deuxième faisceau laser jusqu'au bloc optique.

L'invention a également pour objet un procédé de fabrication additive par fusion laser d'un lit de poudre. Le procédé est caractérisé en ce qu'il comprend en alternance :
a) une étape de formation consistant à former au moins une couche de matière par fusion d'un lit de poudre sous l'action d'un premier faisceau laser ; et
b) une étape d'usinage consistant à usiner au moins une partie de cette couche de matière sous l'action d'un deuxième faisceau laser ;
de manière à réaliser une pièce par empilement successif de couches de matière fusionnées puis usinées.

Selon d'autres caractéristiques avantageuses du procédé selon l'invention, prises isolément ou en combinaison :
- Dans l'étape de formation, le premier faisceau laser est généré par une première unité laser comprenant une source laser continue.
- Dans l'étape d'usinage, le deuxième faisceau laser est généré par une deuxième unité laser comprenant une source laser impulsionnelle.
- Dans au moins une étape d'usinage au cours du procédé, le deuxième faisceau laser est mis en oeuvre pour réaliser une texturation ou fonctionnalisation de surface de la pièce.
- Lors de la dernière étape d'usinage du procédé, le deuxième faisceau laser est mis en oeuvre pour réaliser une texturation ou fonctionnalisation de surface de la
- Dans l'étape de formation et l'étape d'usinage, les faisceaux lasers sont focalisés par un même bloc optique sur le lit de poudre à fusionner ou sur la couche de matière à usiner.
- Entre l'étape de formation et l'étape d'usinage, des moyens mobiles de guidage sont déplacés en amont du bloc optique, sur le chemin optique commun des faisceaux, pour permettre aux faisceaux issus des deux unités lasers d'être aiguillés vers la pièce à travers le scanner.

L'invention sera mieux comprise à la lecture de la description qui va suivre, donnée uniquement à titre d'exemple non limitatif et faite en référence aux dessins annexés sur lesquels :
- la figure 1 est une représentation schématique d'un système de fabrication additive conforme à l'invention, illustrant une première étape d'un procédé de fabrication additive également conforme à l'invention ;
- la figure 2 est une représentation schématique du système, illustrant une deuxième étape du procédé.

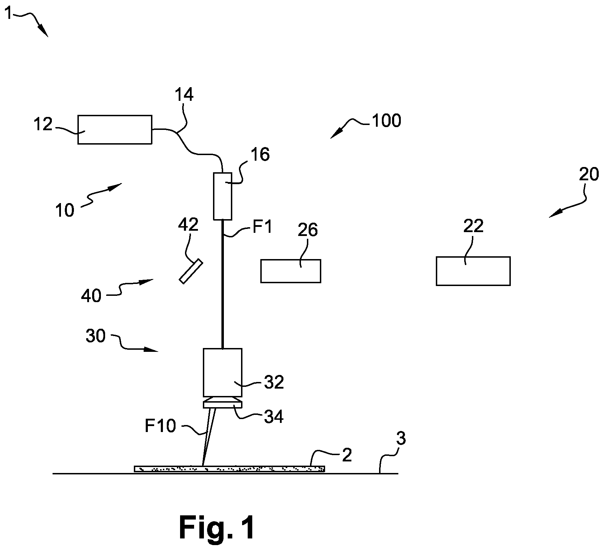

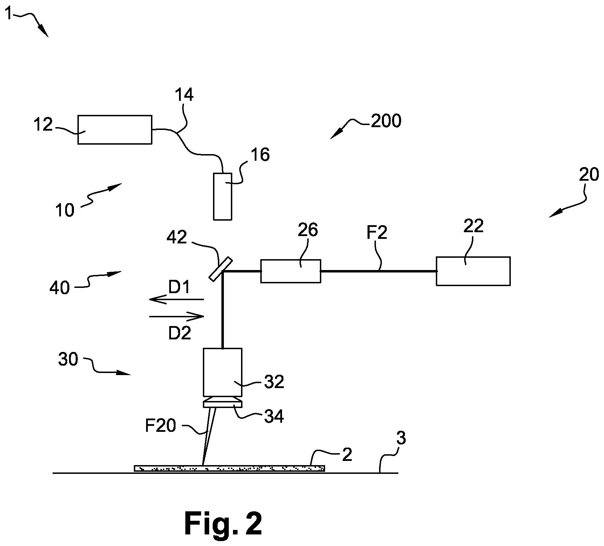

Sur les figures 1 et 2 est représenté un système de fabrication additive 1, permettant de réaliser une pièce par fusion laser d'un lit de poudre 2.

Le système 1 comprend deux unités laser 10 et 20, un bloc optique 30 et un dispositif de guidage 40. Le système 1 comprend également un dispositif de dépose du lit de poudre 2 sur un support 3, ce dispositif n'étant pas représenté dans un but de simplification. Avantageusement, les éléments constitutifs du système 1 peuvent être intégrés à une même machine, présentant une architecture relativement simple et compacte.

La première unité laser 10 comprend une source laser continue 12 reliée par une fibre optique 14 à un premier dispositif afocal agrandisseur 16, qui forme un collimateur. L'unité laser 10 est conçue pour générer sélectivement un faisceau laser F1, pour la fusion du lit de poudre 2.

La deuxième unité laser 20 comprend une source laser impulsionnelle 22, associée à un deuxième dispositif afocal agrandisseur 26, qui forme un collimateur. L'unité laser 20 est conçue pour générer sélectivement un faisceau laser F2, pour l'usinage d'une couche de matière obtenue au préalable par fusion du lit de poudre 2 grâce à l'unité laser 10. Selon un mode de réalisation particulier, l'unité laser 20 est conçue pour réaliser une texturation ou fonctionnalisation de surface de la pièce. Cette fonctionnalisation de surface peut par exemple permettre d'apporter des propriétés d'hydrophobie à l'intérieur de la pièce ou en surface, par la création de nanostructures. La source 22 produit des impulsions ultra-brèves (d'une durée de l'ordre de quelques femtosecondes à quelques dizaines de picosecondes) et ayant une puissance crête élevée (quelques dizaines à quelques centaines de microJoules). De préférence, les impulsions présentent une durée comprise entre 300 et 900 femtosecondes. Le laser femtoseconde a l'avantage d'affecter très peu thermiquement les matériaux et de pouvoir réaliser des structurations micrométriques.

Le bloc optique 30 comprend un scanner biaxial 32 couplé à une lentille de focalisation 34. Le bloc optique 30 est conçu pour diriger sélectivement le faisceau laser F1 ou F2 reçu en amont par le scanner 32, en un point précis du lit de poudre 2 ou de la couche de matière obtenue par fusion du lit de poudre 2, sous forme d'un faisceau laser F10 ou F20 focalisé en aval par la lentille 34. En d'autres termes, le même bloc optique 30 permet de focaliser les faisceaux lasers F10 et F20 en alternance sur le lit de poudre 2 à fusionner et sur la couche de matière à usiner.

Le dispositif de guidage 40 est prévu pour guider le faisceau laser F2 émis par l'unité laser 20 jusqu'au bloc optique 30. Sur l'exemple des figures 1 et 2, le dispositif de guidage 40 comprend un miroir 42 mobile en translation suivant deux directions opposées D1 et D2. Plus précisément, le miroir 42 est mobile dans la zone située entre le scanner 32 et les dispositifs 16 et 26, pour s'écarter du trajet du faisceau F1 et se positionner sur le trajet du faisceau F2.

De préférence, les sources 12 et 22 sont choisies de sorte que les faisceaux lasers F1 et F2 présentent des longueurs d'onde proches. Ainsi, les traitements appliqués aux éléments optiques du scanner 32 et de la lentille 34 conviennent pour les deux faisceaux F1 et F2. Par exemple, chacun des faisceaux F1 et F2 peut présenter une longueur d'onde comprise entre 1030 nm et 1080 nm.

Lorsque les faisceaux F1 et F2 présentent des longueurs d'ondes éloignées l'une de l'autre, les éléments optiques du scanner 32 et de la lentille 34 sont spécifiquement traités pour les deux longueurs d'onde. Dans ce cas, le dispositif de guidage 40 peut comprendre une lame dichroïque fixe. Par exemple, le faisceau F1 peut présenter une longueur d'onde comprise entre 1060 nm et 1080 nm tandis que le faisceau F2 présente une longueur d'onde comprise entre 800 nm et 1030 nm.

Le procédé de fabrication additive conforme à l'invention consiste en une séquence comprenant une alternance d'étapes 100 et 200, détaillées ci-après.

En premier lieu, le lit de poudre 2 est déposé sur le support 3. De préférence, une couche de poudre est étalée de manière uniforme sur le support 3. En alternative, la couche de poudre peut être étalée avec une épaisseur variable sur le support 3.

L'étape 100 montrée à la figure 1 consiste à former une couche de matière par fusion du lit de poudre 2 déposé sur le support 3. L'unité laser 10 émet le faisceau laser F1 continu, qui est collimaté au diamètre adéquat par le dispositif 16 et transmis au bloc optique 30. Le faisceau F1 est dévié par le scanner 32 devant la lentille de focalisation 34. Le bloc optique 30 dirige le faisceau laser F10 focalisé sur le lit de poudre 2 et fait fusionner les grains pour former une ou plusieurs couches de matière, suivant le parcours défini pour construire la pièce. La poudre non fondue entourant cette pièce peut servir de soutien, à la fois pour la pièce et pour les couches de poudre suivantes.

L'étape 200 montrée à la figure 2 consiste à usiner au moins une partie de la dernière couche de matière formée lors de l'étape 100. Au début de l'étape 200, le miroir 42 est positionné sur le chemin optique du faisceau F2 par translation selon la direction F2. L'unité laser 20 émet le faisceau laser F2, qui est collimaté au diamètre adéquat par le dispositif 26 et dévié par le miroir 42 en direction du bloc optique 30. Le positionnement du miroir 42 permet d'envoyer le faisceau F2 suivant le même chemin optique que le faisceau F1. Le faisceau F2 est dévié par le scanner 32 devant la lentille de focalisation 34. Le bloc optique 30 dirige le faisceau laser F20 focalisé sur la couche de matière à usiner, en parcourant le contour ou la zone à usiner. Ainsi, l'étape 200 permet d'obtenir une découpe nette de la couche de matière, suivant le parcours défini pour construire la pièce. Selon un mode de réalisation particulier, l'étape 200 consiste à texturer ou fonctionnaliser la surface de la pièce. A la fin de l'étape 200, le miroir 42 est retiré du chemin optique du faisceau F1 par translation selon la direction D1.

Les étapes 100 et 200 sont répétées, en alternance, autant de fois que nécessaire pour fabriquer la pièce complète. Avant chaque étape 100, on dépose une ou plusieurs couches formant un lit de poudre 2 sur la dernière couche de matière obtenue à l'issue de l'étape 200.

Avantageusement, la séquence d'étapes 100 et 200 constituant le procédé peut être réalisée en mettant en oeuvre le système 1.

En pratique, le système 1 peut être conformé différemment des figures 1 et 2 sans sortir du cadre de l'invention.

En variante non représentée, la source 22 peut être reliée au dispositif 26 par une fibre optique.

Selon une autre variante non représentée, le dispositif de guidage 40 peut être différent d'un miroir 42 mobile en translation. Par exemple, le dispositif 40 peut comprendre un miroir 42 mobile en rotation. Selon un autre exemple, le dispositif 40 peut comprendre un ensemble de miroirs, incluant au moins un miroir fixe et au moins un miroir mobile.

Selon un autre exemple, le dispositif 40 peut être configuré pour s'écarter du trajet du faisceau F2 et se positionner sur le trajet du faisceau F1. Selon un autre exemple, dans le cas où les sources lasers 12 et 22 sont polarisées, le dispositif de guidage 40 peut comprendre un cube polariseur. Selon un autre exemple mentionné plus haut, dans le cas où les faisceaux F1 et F2 présentent des longueurs d'ondes éloignées l'une de l'autre, le dispositif de guidage 40 peut comprendre une lame dichroïque fixe.

En outre, les caractéristiques techniques des différents modes de réalisation et variantes mentionnés ci-dessus peuvent être, en totalité ou pour certaines d'entre elles, combinées entre elles. Ainsi, le système 1 peut être adapté en termes de coût, de fonctionnalités et de performance.

## Revendications

1. Système de fabrication additive (1) par fusion laser d'un lit de poudre (2), **caractérisé en ce que** le système (1) comprend :
- une première unité laser (10) émettant sélectivement un premier faisceau laser (F1, F10) pour former au moins une couche de matière par fusion du lit de poudre (2) ;
- une deuxième unité laser (20) émettant sélectivement un deuxième faisceau laser (F2, F20) pour usiner au moins une partie de cette couche de matière ; et
- un bloc optique (30) permettant de focaliser le premier faisceau laser (F1, F10) sur le lit de poudre (2) à fusionner et le deuxième faisceau laser (F2, F20) sur la couche de matière à usiner ;
le système (1) étant apte à réaliser une pièce par empilement successif de couches de matière fusionnées puis usinées.

2. Système (1) selon la revendication 1, **caractérisé en ce que** la première unité laser (10) comprend une source laser continue (12).

3. Système (1) selon l'une des revendications 1 ou 2, **caractérisé en ce que** la deuxième unité laser (20) comprend une source laser impulsionnelle (22).

4. Système (1) selon la revendication 3, **caractérisé en ce que** la source laser impulsionnelle (22) produit des impulsions présentant une durée de l'ordre de quelques femtosecondes à quelques dizaines de picosecondes.

5. Système (1) selon l'une des revendications 3 ou 4, **caractérisé en ce que** la source laser impulsionnelle (22) produit des impulsions présentant une durée comprise entre 300 et 900 femtosecondes.

6. Système (1) selon l'une des revendications 1 à 5, **caractérisé en ce que** le bloc optique (30) comprend un scanner biaxial (32) et une lentille de focalisation (34).

7. Système (1) selon l'une des revendications 1 à 6, **caractérisé en ce qu'**il comprend également des moyens mobiles de guidage (40), configurés pour guider sélectivement le premier faisceau laser (F1, F10) ou le deuxième faisceau laser (F2, F20) jusqu'au bloc optique (30).

8. Procédé de fabrication additive par fusion laser d'un lit de poudre (2), **caractérisé en ce que** le procédé comprend en alternance :
- une étape de formation (100) consistant à former au moins une couche de matière par fusion d'un lit de poudre (2) sous l'action d'un premier faisceau laser (F1, F10) ; et
- une étape d'usinage (200) consistant à usiner au moins une partie de cette couche de matière sous l'action d'un deuxième faisceau laser (F2, F20) ;
de manière à réaliser une pièce par empilement successif de couches de matière fusionnées puis usinées.

9. Procédé selon la revendication 8, **caractérisé en ce que** dans l'étape de formation (100), le premier faisceau laser (F1, F10) est généré par une première unité laser (10) comprenant une source laser continue (12).

10. Procédé selon l'une des revendications 8 ou 9, **caractérisé en ce que** dans l'étape d'usinage (200), le deuxième faisceau laser (F2, F20) est généré par une deuxième unité laser (20) comprenant une source laser impulsionnelle (22).

11. Procédé selon l'une des revendications 8 à 10, **caractérisé en ce que** dans au moins une étape d'usinage (200) au cours du procédé, le deuxième faisceau laser (F2, F20) est mis en oeuvre pour réaliser une texturation ou fonctionnalisation de surface de la pièce.

12. Procédé selon l'une des revendications 8 à 11, **caractérisé en ce que** lors de la dernière étape d'usinage (200) du procédé, le deuxième faisceau laser (F2, F20) est mis en oeuvre pour réaliser une texturation ou fonctionnalisation de surface de la pièce.

13. Procédé selon l'une des revendications 8 à 12, **caractérisé en ce que** dans l'étape de formation (100) et l'étape d'usinage (200), les faisceaux lasers (F1, F10 ; F2, F20) sont focalisés par un même bloc optique (30) sur le lit de poudre (2) à fusionner ou sur la couche de matière à usiner.

14. Procédé selon la revendication 13, **caractérisé en ce qu'**entre l'étape de formation (100) et l'étape d'usinage (200), des moyens mobiles de guidage (40) sont déplacés en amont du bloc optique (30), sur le chemin optique commun des faisceaux lasers (F1, F10 ; F2, F20).

## Patentansprüche

1. System zur additiven Herstellung (1) durch Laserfusion eines Pulverbettes (2), **dadurch gekennzeichnet, dass** das System (1) umfasst:
- eine erste Lasereinheit (10), die selektiv einen ersten Laserstrahl (F1, F10) aussendet, um mindestens eine Materialschicht durch Fusion des Pulverbettes (2) zu bilden;
- eine zweite Lasereinheit (20), die selektiv einen zweiten Laserstrahl (F2, F20) aussendet, um mindestens einen Teile dieser Materialschicht zu bearbeiten; und
- eine optische Einheit (30), mit der der erste Laserstrahl (F1, F10) auf dem zu fusionierenden Pulverbett (2) fokussiert wird und der zweite Laserstrahl (F2, F20) auf dem zu bearbeitenden Material;
das System (1) ist in der Lage ein Teil durch aufeinanderfolgendes Stapeln der fusionierten und dann bearbeiteten Materialschichten herzustellen.

2. System (1) gemäß Anspruch 1, **dadurch gekennzeichnet, dass** die erste Lasereinheit (10) eine kontinuierliche Laserquelle (12) enthält.

3. System (1) gemäß einem der vorstehenden Ansprüche 1 oder 2, **dadurch gekennzeichnet, dass** die zweite Lasereinheit (20) eine gepulste Laserquelle (22) enthält.

4. System (1) gemäß Anspruch 3, **dadurch gekennzeichnet, dass** die gepulste Laserquelle (22) Pulse mit einer Dauer in der Größenordnung einiger Femtosekunden und einiger Dutzend Pikosekunden erzeugt.

5. System (1) gemäß einem der vorstehenden Ansprüche 3 oder 4, **dadurch gekennzeichnet, dass** die gepulste Laserquelle (22) Pulse mit einer Dauer zwischen 300 und 900 Femtosekunden erzeugt.

6. System (1) gemäß einem der vorstehenden Ansprüche 1 bis 5, **dadurch gekennzeichnet, dass** optische Einheit (30) einen biaxialen Scanner (32) und eine Fokussierlinse (34) enthält.

7. System (1) gemäß einem der vorstehenden Ansprüche 1 bis 6, **dadurch gekennzeichnet, dass** es außerdem bewegliche Führungselemente (40) enthält, die dazu konfiguriert sind, selektiv den ersten Laserstrahl (F1, F10) oder den zweiten Laserstrahl (F2, F20) bis zur optischen Einheit (30) zu führen.

8. Additives Herstellungsverfahren durch Laserfusion eines Pulverbettes (2), **dadurch gekennzeichnet, dass** das Verfahren alternierend umfasst:
- einen Bildungsschritt (100), der darin besteht, mindestens eine Materialschicht durch Fusion eines Pulverbettes (2) unter der Einwirkung eines ersten Laserstrahls (F1, F10) zu bilden; und
- einen Bearbeitungsschritt (200), der darin besteht, mindestens einen Teil dieser Materialschicht unter der Wirkung eines zweiten Laserstrahls (F2, F20) zu bearbeiten; so dass ein Teil durch aufeinanderfolgendes Stapeln der fusionierten und dann bearbeiteten Materialschichten hergestellt wird.

9. Herstellungsverfahren gemäß Anspruch 8, **dadurch gekennzeichnet, dass** während des Bildungsschritts (100) der erste Laserstrahl (F1, F10) von einer ersten Lasereinheit (10) erzeugt wird, die eine kontinuierliche Laserquelle (12) enthält.

10. Herstellungsverfahren nach einem der Ansprüche 8 oder 9, **dadurch gekennzeichnet, dass** während des Bearbeitungsschritts (200) der zweite Laserstrahl (F2, F20) von einer zweiten Lasereinheit (20) erzeugt wird, die eine gepulste Laserquelle (22) enthält.

11. Herstellungsverfahren nach einem der Ansprüche 8 bis 10, **dadurch gekennzeichnet, dass** zumindest während eines Bearbeitungsschritts (200) während des Verfahrens der zweite Laserstrahl (F2, F20) eingesetzt wird, um eine Texturierung oder Funktionalisierung der Oberfläche des Teils auszuführen.

12. Herstellungsverfahren nach einem der Ansprüche 8 bis 11, **dadurch gekennzeichnet, dass** während des letzten Bearbeitungsschritts (200) des Verfahrens der zweite Laserstrahl (F2, F20) eingesetzt wird, um eine Texturierung oder Funktionalisierung der Oberfläche des Teils auszuführen.

13. Herstellungsverfahren nach einem der Ansprüche 8 bis 12, **dadurch gekennzeichnet, dass** während des Bildungsschritts (100) und des Bearbeitungsschritts (200) die Laserstrahlen (F1, F10, F2, F20) von derselben optischen Einheit (30) auf dem zu fusionierenden Pulverbett (2) oder der zu bearbeiteten Materialschicht fokussiert werden.

14. Herstellungsverfahren gemäß Anspruch 13, **dadurch gekennzeichnet, dass** zwischen dem Bildungsschritt (100) und dem Bearbeitungsschritt (200) bewegliche Führungselemente (40) oberhalb der optischen Einheit (30) auf dem gemeinsamen optischen Weg der Laserstrahlen (F1, F10, F2, F20) verschoben werden.

## Claims

1. A system (1) of additive-manufacturing by laser melting of a powder bed (2), **characterized in that** the system (1) comprises:
- a first laser unit (10) selectively emitting a first laser beam (F1, F10) to form at least one layer of material by melting the powder bed (2);
- a second laser unit (20) selectively emitting a second laser beam (F2, F20) to machine at least a portion of said layer of material; and
- an optical unit (30) enabling to focus the first laser beam (F1, F10) on the powder bed (2) to be melted and the second laser beam (F2, F20) on the layer of material to be machined;
the system (1) being able to produce a part by successive stacking of melted then machined layers of material.

2. The system (1) according to claim 1, **characterized in that** the first laser unit (10) comprises a continuous laser source (12).

3. The system (1) according to either of claims 1 or 2, **characterized in that** the second laser unit (20) comprises a pulsed laser source (22).

4. The system (1) according to claim 3, **characterized in that** the pulsed laser source (22) produces pulses of a duration on the order of a few femtoseconds to a few tens of picoseconds.

5. The system (1) according to either of claims 3 or 4, **characterized in that** the pulsed laser source (22) produces pulses having a duration comprised between 300 and 900 femtoseconds.

6. The system (1) according to any one of claims 1 to 5, **characterized in that** the optical unit (30) comprises a biaxial scanner (32) and a focusing lens (34).

7. The system (1) according to any one of claims 1 to 6, **characterized in that** it also comprises movable guiding means (40), configured to selectively guide the first laser beam (F1, F10) or the second laser beam (F2, F20) to the optical unit (30).

8. A process of additive-manufacturing by laser melting of a powder bed (2), **characterized in that** the process comprises alternately:
- a formation step (100) consisting of forming at least one layer of material by melting a powder bed (2) under the action of a first laser beam (F1, F10); and
- a machining step (200) consisting of machining at least a portion of said layer of material under the action of a second laser beam (F2, F20);
so as to produce a part by successive stacking of melted then machined layers of material.

9. The process according to claim 8, **characterized in that** in the formation step (100), the first laser beam (F1, F10) is generated by a first laser unit (10) comprising a continuous laser source (12).

10. The process according to either one of claims 8 or 9, **characterized in that** in the machining step (200), the second laser beam (F2, F20) is generated by a second laser unit (20) comprising a pulsed laser source (22).

11. The process according to any one of claims 8 to 10, **characterized in that** in the at least one machining step (200) during the process, the second laser beam (F2, F20) is used to produce surface texturing or functionalization of the part.

12. The process according to any one of claims 8 to 11, **characterized in that** during the last machining step (200) of the process, the second laser beam (F2, F20) is used to produce surface texturing or functionalization of the part.

13. The process according to any one of claims 8 to 12, **characterized in that** in the formation step (100) and the machining step (200), the laser beams (F1, F10; F2, F20) are focused by a single optical unit (30) onto the powder bed (2) to be melted or onto the layer of material to be machined.

14. The process according to claim 13, **characterized in that** between the formation step (100) and the machining step (200), movable guiding means (40) are moved upstream of the optical unit (30), in the common optical path of the laser beams (F1, F10; F2, F20).
